**Europäisches Patentamt**

**European Patent Office**

**Office européen des brevets**

(19)

(11) Veröffentlichungsnummer : **0 438 431 B1**

## (12) EUROPÄISCHE PATENTSCHRIFT

(45) Veröffentlichungstag der Patentschrift :
30.12.92 Patentblatt 92/53

(51) Int. Cl.$^5$ : **F02D 41/18, G01F 1/68**

(21) Anmeldenummer : **89910830.2**

(22) Anmeldetag : **05.10.89**

(86) Internationale Anmeldenummer :
**PCT/DE89/00632**

(87) Internationale Veröffentlichungsnummer :
**WO 90/04091 19.04.90 Gazette 90/09**

(54) EINRICHTUNG ZUR TEMPERATURSTEUERUNG EINES WIDERSTANDS.

(30) Priorität : **15.10.88 DE 3835235**

(43) Veröffentlichungstag der Anmeldung :
**31.07.91 Patentblatt 91/31**

(45) Bekanntmachung des Hinweises auf die
Patenterteilung :
**30.12.92 Patentblatt 92/53**

(84) Benannte Vertragsstaaten :
**DE FR GB SE**

(56) Entgegenhaltungen :
GB-A- 2 082 252
US-A- 4 125 093
US-A- 4 537 172

(56) Entgegenhaltungen :
**Patent Abstracts of Japan, volume 12, Nr. 460
(p-795) (3307), 5 December1988, & JP, A,
63184017 Mazda Motor -corp.)29July 1988
Patent Abstracts of Japan, volume 9, Nr.286
(M-429) (2009), 13 November 1985, & JP, A,
60125751 (nissan Jidosha K.K.) 5July 1985**

(73) Patentinhaber : **ROBERT BOSCH GMBH
Postfach 30 02 20
W-7000 Stuttgart 30 (DE)**

(72) Erfinder : **KIENZLE, Wolfgang
Schlossgartenstrasse 18
W-7254 Hemmingen (DE)**
Erfinder : **SAUER, Rudolf
Auf der Lug 3
W-7141 Benningen (DE)**
Erfinder : **GRAS, Jürgen
Entenäcker 26
W-7120 Bietigheim-Bissingen (DE)**

EP 0 438 431 B1

## Beschreibung

Stand der Technik

Bekannt ist ein zu Meßzwecken dienender Widerstand in Form eines Hitzdraht-Luftmassenmessers bei einem Kraftfahrzeug, dessen Hitzdraht nach jedem Abschaltvorgang der Brennkraftmaschine in einem Freibrennvorgang von Suchmutzpartikeln freigebrannt wird (US-A-4 373 383). Dies erfolgt mittels einer definierten Verstimmung einer Brückenschaltung, die den Widerstand in einem Brückenzweig enthält. Prinzipiell bringt dieses immer wiederkehrende Freibrennen gute Ergebnisse; insbesondere wird dadurch auch die durch Verschmutzung des im allgemeinen aus Platindraht bestehenden Widerstands verursachte Kennliniendrift nach jedem Abstellen der Brennkraftmaschine beseitigt. Mit jedem Freibrennvorgang ist jedoch auch ein Abdampfen von Teilen des Drahtmaterials des Widerstands verbunden, so daß eine große Zahl von Freibrennvorgängen ebenfalls eine nachteilige Kennlinienverfälschung bewirken.

Aus US-A-4 125 093 ist ein Durchflußmesser auf Halbleiterbasis bekannt, der in Kraftstoffzumeßsystemen von Kraftfahrzeugen für die Meßung der Luftmasse und der Kraftstoffmenge einsetzbar ist. Um Verunreinigungen des Sensors zu verhindern, wird in dieser Schrift vorgeschlagen, den Halbleitersensor mit einer Passivierungsschicht aus Siliziumnitrid und gegebenenfalls mit einer Goldplattierung zu bedecken.

Aus JP-A-60 125 751 und JP-A-63 184 018 ist es bekannt, die angesaugte Luftmasse zu integrieren bzw. zu summieren und den Integrations- bzw. Summenwert mit einem Grenzwert für das Freibrennen zu vergleichen. Wenn der Integrations- bzw. Summenwert den Grenzwert überschreitet, wird ein Freibrennvorgang eingeleitet.

Vorteile der Erfindung

Das erfindungsgemäße Verfahren und die erfindungsgemäße Einrichtung zur Temperatursteuerung eines Meßzwecken dienenden Widerstandes ermöglichen durch die Berücksichtigung des tatsächlichen Verschmutzungsgrades des Widerstandes eine drastische Reduzierung der Anzahl der Freibrennvorgänge im Vergleich zu einer Betriebsweise, bei der ohne Berücksichtigung des Verschmutzungsgrades ein Freibrennvorgang bei jedem Abstellvorgang der Brennkraftmaschine eingeleitet wird. Bei noch hinreichender Reinigungswirkung wird durch die erfindungsgemäße Lösung eine Kennlinienverfälschung durch Materialabdampfen wesentlich verringert, so daß eine wesentlich längere Betriebsdauer der Einrichtung mit zugleich hoher Meßgenauigkeit erreicht wird.

Vorteilhaft können für die erfindungsgemäße Einrichtung ohnedies in herkömmlichen Suteuergeräten und/oder Brennkraftmaschinen vorhandene Mittel zur Messung des Kraftstoffdurchsatzes für den erfindungsgemäßen Zweck sinnvoll mit herangezogen werden, indem mittelbar aus der durchgesetzten Kraftstoffmenge auf den Verschmutzungsgrad des Widerstandes geschlossen wird.

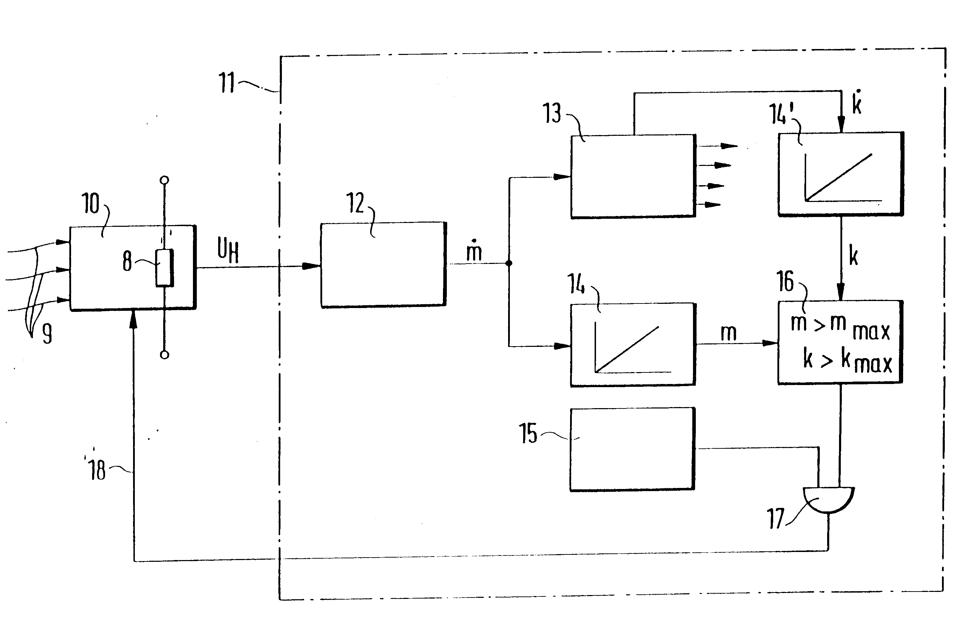

Weitere Vorteile der Erfindung ergeben sich aus der Zeichnung und der nachfolgenden Beschreibung eines Ausführungsbeispiels der Erfindung.

Zeichnung

Die einzige Figur zeigt ein Blockdiagramm der erfindungsgemäßen Einrichtung.

Beschreibung des Ausführungsbeispiels

In der Zeichnung ist eine Einrichtung zur Temperatursteuerung eines Meßzwecken dienenden Widerstandes 8 dargestellt. Der Widerstand 8 ist Bestandteil einer an sich bekannten Brückenschaltung, die in einem Luftmassenmesser 10 einer Brennkraftmaschine angeordnet ist und von dem der Brennkraftmaschine zugeführten Luftstrom 9 beaufschlagt wird. Der Luftmassenmesser 10 ist mit einem Steuergerät 11 verbunden, das u.a. über ein Erfassungsmittel 12 aus der an der den Widerstand 8 umfassenden Brückenschaltung abgreifbaren Spannung $U_H$ unter Berücksichtigung der Kennlinie des Luftmassenmessers 10 den Luftmassendurchsatz $\dot{m}$ ermittelt und nach Maßgabe des Luftmassendurchsatzes vermittels einer Zumeßstufe 13 den Kraftstoff für die Brennkraftmaschine zumißt. Der Ausgangsanschluß der Erfassungsmittel 12 ist mit dem Eingangsanschluß von ersten Integrationsmitteln 14 verbunden, deren Ausgangsanschluß mit einem ersten Eingang einer Vergleichsstufe 16 verbunden ist. Der Ausgangsanschluß der Vergleichsstufe 16 führt zu einem ersten Eingang eines Verknüpfungsglieds 17, dessen Ausgangsanschluß 18 mit einem Steuereingang des Luftmassenmessers 10 verbunden ist. Ein zweiter Eingangsanschluß des Verknüpfungsglieds 17 ist mit dem Ausgang einer Freibrennsteuerschaltung 15 verbunden.

Die Wirkungsweise dieser Einrichtung ist wie folgt. Nach Maßgabe der an der Brückenschaltung, die den Widerstand 8 umfaßt, anstehenden Spannung $U_H$ bildet das Erfassungsmittel 12 des Suteuergeräts 11 unter Berücksichtigung der Kennlinie des Luftmassenmessers 10 auf an sich bekannte Weise ein dem Luftmassendurchsatz $\dot{m}$ entsprechendes elektrisches Suignal. Dieses elektrische Signal wird der Zumeßstufe 13 des Steuergeräts 11 zugeleitet, die den im einzelnen in der Figur nicht dargestellten Einspritzmitteln der Brennkraftmaschine jeweils eine dem Luftmassendurchsatz $\dot{m}$ entsprechende Kraftstoffmenge zuführt.

Ein Ausgangsanschluß der Zumeßstufe 13, der ein den Kraftstoffmengendurchsatz $\dot{k}$ entsprechendes Ausgangssignal abgibt, ist mit dem Eingangsanschluß von Integrationsmitteln 14′ verbunden. Diese Integrationsmittel bilden durch zeitliche Integration die Kraftstoffmenge, die die Zumeßstufe 13 den Einspritzmitteln der Brennkraftmaschine zuführt. Das der Kraftstoffmenge k entsprechende Ausgangssignal wird vom Ausgangsanschluß der Integrationsmittel 14′ einem Eingang der Vergleichsstufe 16 zugeleitet und dort mit einem vorgebbaren Grenzwert $k_{Max}$ verglichen. Die Erfindung geht hierbei von der Erkenntnis aus, daß die von der Zumeßstufe 13 der Brennkraftmaschine zugeführte Kraftstoffmenge k, zumindest mittelbar, ein Maß für den Verschmutzungsgrad des zu Meßzwecken dienenden Widerstands 8 ist, da zwischen der der Brennkraftmaschine zugeführten Kraftstoffmenge k und der durch den Luftmassenmesser 10 hindurchgeführten Luftmenge m ein gesetzmäßiger Zusammenhang besteht. Wie schon zuvor beim ersten Ausführungsbeispiel der Erfindung erläutert, steuert ein Ausgangssignal am Ausgang der Vergleichsstufe 16 einen Eingangsanschluß des Verknüpfungsgliedes 17 an, wenn die Kraftstoffmenge k den vorgebbaren Grenzwert $k_{Max}$ überschritten hat und die Freibrennsteuerschaltung 15 gleichzeitig ein das Ausschalten der Zündung bzw. das Abstellen des Fahrschalters repräsentierendes Ausgangssignal an den zweiten Eingangsanschluß des Verknüpfungsgliedes 17 abgibt.

**Patentansprüche**

1.  Verfahren zur Temperatursteuerung eines Meßzwecken dienenden Widerstandes, in Luftmassenmeßgeräten bei Brennkraftmaschinen, wobei die Temperatur des stromdurchflossenen Widerstandes während der Meßphase geregelt und nach Ausschalten der Zündung bzw. Abstellen des Fahrschalters zum Zwecke des Freibrennens erhöht wird, dadurch gekennzeichnet, daß der Kraftstoffmengendurchsatz ($\dot{k}$) der Brennkraftmaschine erfaßt wird, daß durch zeitliche Integration des Kraftstoffmengendurchsatzes ($\dot{k}$) die der Brennkraftmaschine zugeführte Kraftstoffmenge (k) bestimmt wird, daß die Kraftstoffmenge (k) mit einem vorgebbaren Grenzwert ($k_{Max}$) verglichen wird und daß bei Überschreiten des Grenzwertes ($k_{Max}$) dann ein Freibrennvorgang des Widerstandes (8) durchgeführt wird.

2.  Vorrichtung zur Durchführung des Verfahrens nach Anspruch 1, enthaltend eine Brennkraftmaschine, Mittel zur Kraftstoffzumessung für die Brennkraftmaschine, ein Luftmassenmeßgerät mit einem stromdurchflossenen Widerstand (8), der zum Zwecke des Freibrennens aufheizbar ist, dadurch gekennzeichnet, daß Erfassungsmittel (13) für den Kraftstoffmengendurchsatz ($\dot{k}$) sowie Integrationsmittel (14) zur Bildung der Kraftstoffmenge (k) aus dem Kraftstoffmengendurchsatz ($\dot{k}$), sowie eine Vergleichsstufe (16) vorgesehen sind, wobei die Vergleichsstufe (16) die Kraftstoffmenge (k) mit einem vorgebbaren Grenzwert ($k_{Max}$) vergleicht und bei Überschreiten des Grenzwertes einen Freibrennvorgang des Widerstandes (8) veranlaßt.

**Claims**

1.  Method for the temperature control of a resistor serving measurement purposes in air-mass meters in internal combustion engines, the temperature of the current-carrying resistor being regulated during the measuring phase and, after switching off of the ignition or switching off of the controller, being increased for the purpose of burn off, characterised in that the fuel flow ($\dot{k}$) of the internal combustion engine is measured, in that the fuel quantity (k) fed to the internal combustion engine is determined by time integration of the fuel flow ($\dot{k}$), in that the fuel quantity (k) is compared with a prescribed limiting value ($k_{Max}$), and in that in the event of the limiting value ($k_{Max}$) being exceeded a burn-off operation of the resistor (8) is then carried out.

2.  Device for carrying out the method according to Claim 1, containing an internal combustion engine, means for fuel metering for the internal combustion engine, and an air-mass meter with a current-carrying resistor (8) which can be heated for the purpose of burn off, characterised in that there are provided measuring means (13) [sic] for the fuel flow ($\dot{k}$) and integrating means (14) for forming the fuel quantity (k) from the fuel flow ($\dot{k}$), as well as a comparator stage (16), the comparator stage (16) comparing the fuel quantity (k) with a prescribed limiting value ($k_{Max}$) and causing a burn-off operation of tne resistor (8) in the event of the limiting value being exceeded.

**Revendications**

1.  Dispositif de régulation de température d'une résistance servant à des mesures dans des débitmètres de moteur à combustion interne, la température de la résistance parcourue par le courant est régulée pendant la phase de mesure, et après la coupure de l'allumage ou l'arrêt du contrôleur, elle est augmentée en vue de la calcination, caractérisé en ce que le débit massique de carburant (k) du moteur à combustion interne est enregistré, ce qu'on obtient par intégration sur le temps du débit massique de carburant (k) pour avoir la quantité de carburant (k) envoyée au moteur à combustion interne, on compare la quantité de carburant (k) à une valeur limite préétablie ($k_{max}$) et le dépassement de la valeur limite ($k_{max}$ enclenche un processus de calcination de la résistance (8).

2. Dispositif pour réaliser le procédé de la revendication 1, qui comprend un moteur à combustion interne, un moyen pour doser le carburant au moteur, un débitmètre massique d'air avec une résistance (8) parcourue par le courant, qu'on peut chauffer en vue de la calcination, caractérisé en ce qu'on prévoit le moyen de saisie (13) du débit de carburant (k) ainsi que le moyen d'intégration (14) destiné à calculer la quantité de carburant (k), ainsi qu'un étage comparateur (16), l'étage comparateur (16) comparant la quantité de carburant (k) à une valeur limite préétablie ($k_{max}$) et en cas de dépassement de la valeur limite, il commande un processus de calcination de la résistance (8).